# FASCICULE DE BREVET EUROPEEN

(11) **EP 3 887 207 B1**
(45) Date de publication et mention de la délivrance du brevet: **28.12.2022**
(21) Numéro de dépôt: 19835440.9
(22) Date de dépôt: 04.11.2019
(51) Int. Cl.: B60R 16/02, B62D 25/14

(54) **SUPPORT POUR UN FAISCEAU ÉLECTRIQUE D'HABITACLE DE VEHICULE AUTOMOBILE**
HALTERUNG FÜR KABELBAUM EINER KRAFTFAHRZEUGKABINE
SUPPORT FOR A MOTOR VEHICLE CABIN WIRING HARNESS

(30) Priorité: 26.11.2018 FR 1871866
(43) Date de publication de la demande: 06.10.2021
(73) Titulaire: PSA Automobiles SA, 78300 Poissy (FR)
(72) Inventeur: RIVIERRE, Laurent, 75015 PARIS (FR); VILLA, Laurent, 91460 MARCOUSSIS (FR)
(86) Numéro de dépôt international: PCT/FR2019/052599
(87) Numéro de publication internationale: WO 2020/109684

(56) Documents cités:
- FR-A1- 2 899 301
- FR-A1- 2 924 666
- JP-A- S57 172 881
- US-A1- 2010 259 063

## Description

### Domaine technique

La présente invention revendique la priorité de la demande française 1871866 déposée le 26 Novembre 2018 dont le contenu (texte, dessins et revendications) est ici incorporé par référence

L'invention a trait au domaine des véhicules automobiles, plus particulièrement à une structure avant de véhicule automobile.

### Technique antérieure

Une structure avant de véhicule automobile comprend, à chacun des côtés du véhicule, une doublure d'aile avant. Chaque doublure sert également de soutien à un support latéral de traverse de planche de bord, et, à l'avant desdits supports, à une traverse inférieure de baie de pare-brise.

Le document de brevet publié EP 3 312 055 A1 divulgue une attache pour faisceau électrique de véhicule automobile. Cette attache comprend une base destinée à s'engager dans un orifice d'un support, tel qu'un tube métallique, et une ceinture fixée à la base et configurée pour encercler un faisceau électrique en vue de sa fixation au support. Une telle attache est intéressante en ce qu'elle est en principe peu coûteuse et permet d'assurer une fixation stable à un élément léger tel qu'un faisceau électrique. Elle requiert cependant la présence d'un support à proximité immédiate de l'endroit où on désire fixer le faisceau électrique.

Le document de brevet publié FR 3 063 468 A1 divulgue une platine d'attache et de guidage pour des tuyaux et/ou faisceaux cheminant dans un montant de baie de pare-brise. Cette platine, fixée sur l'armature du montant de baie, va maintenir les faisceaux et les tuyaux en place afin notamment de faciliter l'intégration d'un haut-parleur haute-fréquence (« tweeter ») dans ledit montant. Cette platine est par conséquent spécifiquement conçue pour un montant de baie de pare-brise et est peu utile à d'autres emplacements.

Le document de brevet publié FR 2 924 666) divulgue une structure avant de carrosserie de véhicule automobile, mais ne divulguent pas que la structure comprend, en outre, à au moins un des côtés du véhicule, un support de faisceau d'habitacle en appui sur le support latéral de traverse de planche de bord correspondant et sur la traverse inférieure de baie.

### Exposé de l'invention

L'invention a pour objectif de pallier au moins un des inconvénients de l'état de la technique susmentionné. Plus particulièrement, l'invention a pour objectif de protéger le faisceau d'habitacle des chocs, notamment lors du montage de la planche de bord dans le véhicule.

L'invention a pour objet une structure avant de carrosserie de véhicule automobile, comprenant : à chacun des côtés du véhicule, un support latéral de traverse de planche de bord fixé à une doublure d'aile avant, et une traverse inférieure de baie positionnée à l'avant des supports latéraux, et fixée latéralement aux doublures d'aile avant, remarquable en ce que la structure comprend, en outre, à au moins un des côtés du véhicule, un support de faisceau d'habitacle en appui sur le support latéral de traverse de planche de bord correspondant et sur la traverse inférieure de baie.

Le faisceau d'habitacle est avantageusement un faisceau électrique.

Selon un mode avantageux de l'invention, le ou chacun des supports de faisceau comprend une portion arrière verticale avec une encoche formant l'appui sur le support latéral de traverse de planche de bord.

Selon un mode avantageux de l'invention, la portion arrière verticale du ou de chacun des supports de faisceau comprend un orifice de fixation du faisceau. La fixation du faisceau est avantageusement réalisée par une attache avec une agrafe s'engageant dans l'orifice et un collier souple apte à encercler le faisceau. Une telle attache est en soi bien connue.

Selon un mode avantageux de l'invention, la portion arrière verticale du ou de chacun des supports de faisceau est inclinée d'un angle compris entre 30° et 60° par rapport à une direction longitudinale.

Selon un mode avantageux de l'invention, la portion arrière verticale du ou de chacun des supports de faisceau est à distance de la doublure d'aile avant adjacente de manière à former, entre ladite portion et ladite doublure, un passage pour le faisceau.

Selon un mode avantageux de l'invention, le support latéral de traverse de planche de bord sur lequel le ou un des supports de faisceau est en appui comprend une encoche en prise avec l'encoche de la portion arrière verticale dudit support de faisceau.

Selon un mode avantageux de l'invention, l'encoche du ou des supports latéraux de traverse de planche de bord est horizontale.

Selon un mode avantageux de l'invention, le ou chacun des supports de faisceau comprend une portion avant en appui sur la traverse inférieure de baie. Cet appui peut être sécurisé par une fixation tournante, telle qu'au moyen d'une vis, ou d'un goujon soudé.

Selon un mode avantageux de l'invention, la portion avant du ou de chacun des supports de faisceau est horizontale ou est incliné de moins de 30° par rapport à un plan horizontal.

Selon un mode avantageux de l'invention, pour le ou chacun des supports de faisceau, l'encoche correspondante du support latéral de traverse de planche de bord correspondant est configurée pour former une butée en rotation dudit support de faisceau. Ce blocage est avantageusement dans deux sens de rotation, la rotation étant autour d'un axe vertical ou incliné de moins de 30° par rapport à une direction verticale.

Avantageusement, le ou chacun des supports de faisceau est en matériau plastique et d'un seul tenant.

Les mesures de l'invention sont intéressantes en ce qu'elles permettent de protéger le faisceau d'habitacle lors de l'introduction de la planche de bord, par la création d'un espace de sauvegarde au niveau de la jonction entre le montant de baie et la doublure d'aile. La présence de ce support permet ainsi d'éviter l'écrasement du faisceau. Le système de double encoche sur la portion arrière du support de faisceau et sur le support latéral de traverse de planche de bord permet à la fois d'éviter l'affaissement du support de faisceau et d'éviter sa rotation au niveau de la fixation située dans la portion avant. De plus, le maintien du support de faisceau par une seule fixation située dans la portion avant permet d'éviter un alourdissement trop important de la structure. Le support de faisceau est enfin plus léger car réalisé dans des matériaux plastiques, il est également facile à produire et à mettre en place dans la structure.

D'autres caractéristiques et avantages de la présente invention seront mieux compris à l'aide de la description et des dessins.

### Brève description des dessins

[Fig 1] est une vue en perspective d'un véhicule automobile selon l'invention ;
[Fig 2] représente une vue de l'intérieur d'une structure avant du véhicule automobile de la figure 1, au niveau de la jonction entre une doublure d'aile avant et une traverse inférieure de baie, avant montage d'un support de faisceau d'habitacle selon l'invention ;
[Fig 3] représente une vue en perspective du support faisceau d'habitacle selon l'invention ;
[Fig 4] est une vue du support faisceau d'habitacle monté sur la structure avant de véhicule automobile telle que représentée à la figure 2 ;
[Fig 5] est une vue en coupe de la structure avant, au niveau de l'élément de fixation du faisceau d'habitacle sur le support de faisceau d'habitacle selon l'invention.

### Description détaillée

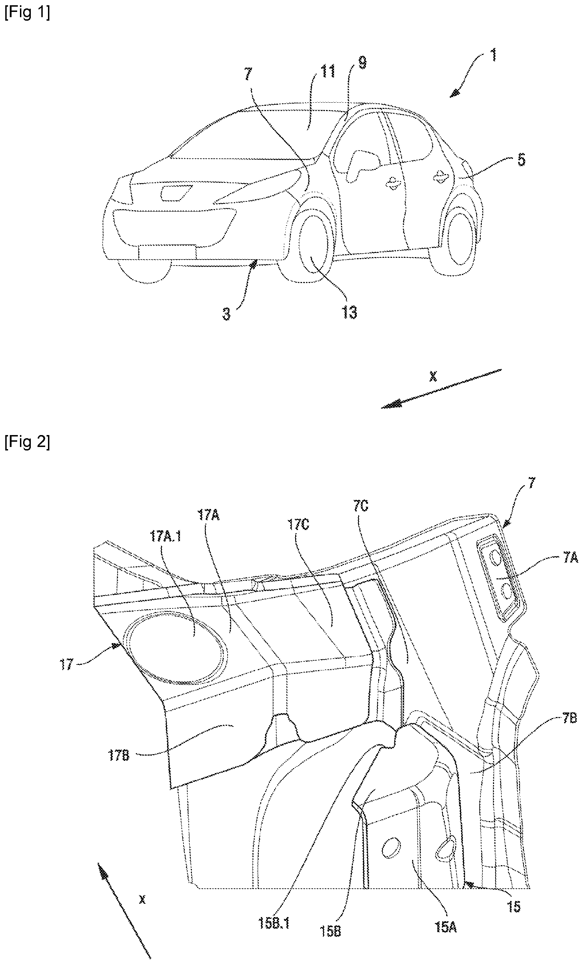

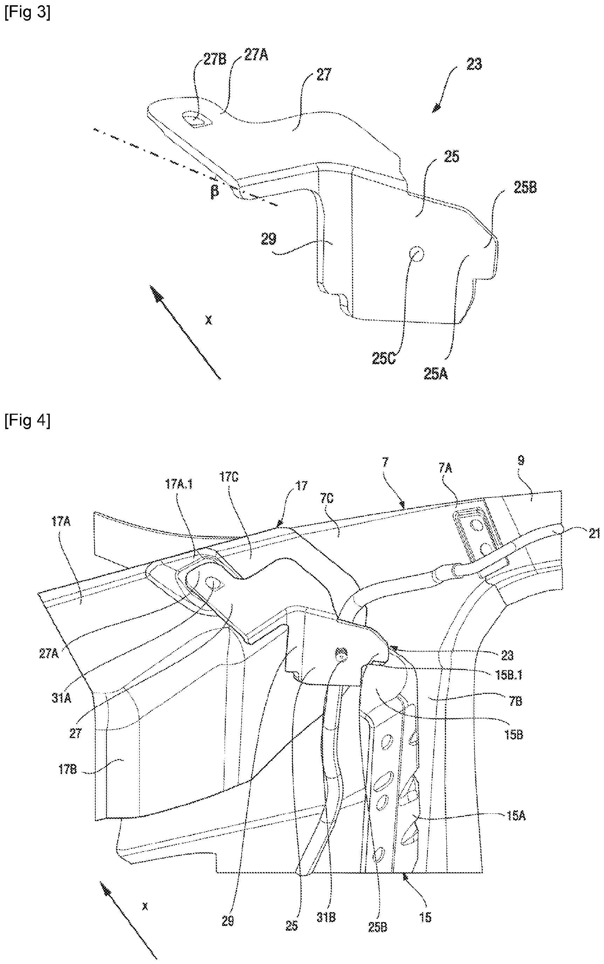

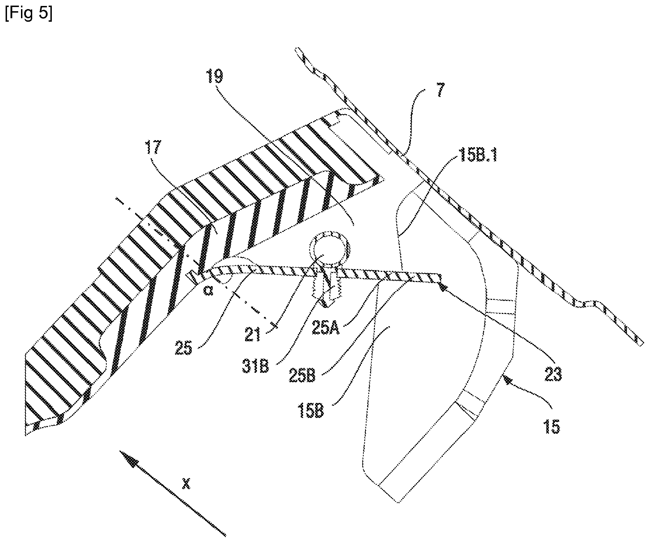

La figure 1 montre une vue en perspective d'un véhicule automobile avec une structure avant selon l'invention. La structure avant 3 de carrosserie du véhicule automobile 1 selon l'invention comprend, à chacun des côtés 5 du véhicule 1, une doublure d'aile avant 7 prolongée à l'arrière par deux montants de baie 9, qui maintiennent latéralement une baie de pare-brise 11. La doublure d'aile avant 7 surmonte également une roue 13. À la jonction entre la doublure d'aile avant 7 et le montant de baie 9 passe un faisceau d'habitacle (visible aux figures 4 et 5), qui est avantageusement un faisceau électrique. Il a été rendu nécessaire de protéger ce faisceau des impacts, causés notamment par l'insertion d'une planche de bord (non visible sur ces figures) lors du montage du véhicule 1. Cette protection est permise grâce à la présence d'un support de faisceau d'habitacle (visible aux figures 3 à 5). La flèche de direction x désigne le sens de déplacement du véhicule 1, dans l'ensemble de ces figures.

La figure 2 montre une vue plus détaillée de la jonction entre la doublure d'aile et une traverse inférieure de baie, sans le support de faisceau d'habitacle selon l'invention. La traverse inférieure 17 de baie s'étend longitudinalement en dessous du pare-brise (visible à la figure 1), et comprend une portion horizontale 17A et une portion verticale 17B. La portion verticale 17B s'étend perpendiculairement à l'arrière de la portion horizontale 17A et vers le bas lorsque la traverse inférieure 17 de baie est en position de montage sur le véhicule. La traverse inférieure 17 de baie comprend en outre deux extrémité latérales 17C, qui permettent la fixation de la traverse 17 sur les doublures d'ailes avant 7. La portion horizontale 17A de la traverse 17 peut comprendre, en outre, une plateforme surélevée 17A.1, dont la fonction sera décrite aux figures 4 et 5.

À chacun des côtés du véhicule, la doublure d'aile avant 7 présente une extrémité supérieure 7A apte à être fixée à un montant de baie (visible aux figures 1 et 4), une portion avant 7C qui reçoit l'extrémité latérale 17C de la traverse inférieure 17 de baie, et une portion verticale 7B pour la fixation d'un support latéral 15 de traverse de planche de bord. Ce support latéral 15 est positionné en arrière de la traverse inférieure 17 de baie, et comprend une portion principale 15A allongée, de section transversale en L, qui s'étend le long de la portion verticale 7B de la doublure d'aile avant 7. À l'extrémité supérieure de la portion principale 15A se trouve une paroi supérieure 15B, avec une encoche 15B.1 avantageusement horizontale, dont la fonction sera évoquée aux figures 4 et 5.

La figure 3 est une vue en perspective du support de faisceau d'habitacle selon l'invention. Ce support 23 de faisceau d'habitacle (visible aux figures 4 et 5) est avantageusement retrouvé à au moins un des côtés du véhicule, plus préférentiellement aux deux côtés. Ce support 23 de faisceau comprend une portion arrière verticale 25 et une portion avant 27. La portion arrière verticale 25 présente une encoche 25B dans une extrémité arrière 25A, et un orifice 25C positionné centralement à ladite portion arrière 25. Ce support 23 de faisceau comprend en outre la portion avant 27 rattachée à la portion arrière 25 par une portion coudée 29. La portion arrière 25 s'étend préférentiellement depuis le milieu arrière de la portion avant 27. La portion avant 27 est horizontale ou inclinée de moins de 30° par rapport à un plan horizontal (angle β). Cette portion avant 27 présente en outre une extension 27A, orientée vers l'avant du véhicule, avec un orifice 27B, dont la fonction sera décrite dans les figures 4 et 5.

Les figures 4 et 5 montrent, respectivement, une vue de l'intérieur de la structure avant décrite à la figure 2 avec le support de faisceau d'habitacle, et une vue en coupe au niveau de l'orifice de la portion arrière verticale dudit support. Sur ces figures, on peut voir que le support 23 de faisceau d'habitacle 21 est en appui sur le support latéral 15 de traverse de planche de bord correspondant et sur l'extrémité latérale 17C de la traverse inférieure 17 de baie correspondante. En particulier, la portion arrière verticale 25 du support 23 de faisceau 21, par le biais de l'encoche 25B, prend appui sur la paroi supérieure 15B du support latéral 15, au niveau de l'encoche 15B.1, qui est en prise avec l'encoche 25B du support 23 de faisceau 21. De plus, cette portion arrière 25 est inclinée d'un angle α compris entre 30° et 60° par rapport à une direction longitudinale. En outre, la portion avant 27 du support 23 de faisceau 21 est en appui sur la traverse inférieure 17 de baie, plus particulièrement en appui sur la plateforme surélevée 17A.1. L'orifice de la portion avant 27 du support 23 de faisceau 21 accueille un élément de fixation 31A, cet élément 31A étant préférentiellement une vis ou un goujon soudé, afin d'assurer l'étanchéité dans la zone. L'orifice de la portion arrière verticale 25 dudit support 23 est également apte à accueillir un élément de fixation 31B, cet élément 31B permettant le maintien du faisceau d'habitacle 21 au sein d'un passage 19 formé par la portion arrière 25 du support 23 positionnée à distance de la doublure d'aile adjacente 7. Le maintien de ce passage 19, notamment lors du montage de la planche de bord (non visible sur ces figures), va permettre de limiter l'écrasement du faisceau 21.

## Revendications

1. Structure avant (3) de carrosserie de véhicule automobile (1), comprenant :
- à chacun des côtés (5) du véhicule (1), un support latéral (15) de traverse de planche de bord fixé à une doublure d'aile avant (7), et
- une traverse inférieure (17) de baie (11) positionnée à l'avant des supports latéraux (15), et fixée latéralement aux doublures d'aile avant (7), **caractérisée en ce que** la structure (3) comprend, en outre, à au moins un des côtés (5) du véhicule (1), un support (23) de faisceau d'habitacle (21) en appui sur le support latéral (15) de traverse de planche de bord correspondant et sur la traverse inférieure (17) de baie (11).

2. Structure avant (3) selon la revendication 1, **caractérisée en ce que** le ou chacun des supports (23) de faisceau (21) comprend une portion arrière verticale (25) avec une encoche (25B) formant l'appui sur le support latéral (15) de traverse de planche de bord.

3. Structure avant (3) selon la revendication 2, **caractérisée en ce que** la portion arrière verticale (25) du ou de chacun des supports (23) de faisceau (21) comprend un orifice de fixation (25C) du faisceau (21).

4. Structure avant (3) selon l'une des revendications 2 et 3, **caractérisée en ce que** la portion arrière verticale (25) du ou de chacun des supports (23) de faisceau (21) est inclinée d'un angle (a) compris entre 30° et 60° par rapport à une direction longitudinale.

5. Structure avant (3) selon l'une des revendications 2 à 4, **caractérisée en ce que** la portion arrière verticale (25) du ou de chacun des supports (23) de faisceau (21) est à distance de la doublure d'aile avant (7) adjacente de manière à former, entre ladite portion (25) et ladite doublure (7), un passage (19) pour le faisceau (21).

6. Structure avant (3) selon l'une des revendications 2 à 5, **caractérisée en ce que** le support latéral (15) de traverse de planche de bord sur lequel le ou un des supports (23) de faisceau (21) est en appui comprend une encoche (15B.1) en prise avec l'encoche (25B) de la portion arrière verticale (25) dudit support (23) de faisceau (21).

7. Structure avant (3) selon la revendication 6, **caractérisée en ce que** l'encoche (15B.1) du ou des supports latéraux (15) de traverse de planche de bord est horizontale.

8. Structure avant (3) selon l'une des revendications 1 à 7, **caractérisée en ce que** le ou chacun des supports (23) de faisceau (21) comprend une portion avant (27) en appui sur la traverse inférieure (17) de baie (11).

9. Structure avant (3) selon la revendication 8, **caractérisée en ce que** la portion avant (27) du ou de chacun des supports (23) de faisceau (21) est horizontale ou est incliné de moins de 30° par rapport à un plan horizontal.

10. Structure avant (3) selon l'une des revendications 6 et 7, et selon l'une des revendications 8 et 9, **caractérisée en ce que** pour le ou chacun des supports (23) de faisceau (21), l'encoche (15B.1) correspondante du support latéral (15) de traverse de planche de bord correspondant est configurée pour former une butée en rotation dudit support (23) de faisceau (21).

## Patentansprüche

1. Frontstruktur (3) einer Kraftfahrzeugkarosserie (1), umfassend:
- an jeder Seite (5) des Fahrzeugs (1) ein seitlicher Querträger-Träger (15) für das Armaturenbrett, der an einem vorderen Flügelfutter (7) befestigt ist, und
- ein unterer Querträger (17) einer Öffnung (11), der vor den Seitenstützen (15) positioniert und seitlich an den vorderen Flügelfutter (7) befestigt ist,
**dadurch gekennzeichnet, dass** die Struktur (3) außerdem an mindestens einer der Seiten (5) des Fahrzeugs (1) einen Träger (23) für das Fahrgastraumbündel (21) umfasst, der an dem entsprechenden Seitenträger (15) für den Querträger des Armaturenbretts und an dem unteren Querträger (17) der Öffnung (11) anliegt.

2. Vorderstruktur (3) nach Anspruch 1, **dadurch gekennzeichnet, dass** der oder jeder der Träger (23) des Bündels (21) einen hinteren vertikalen Abschnitt (25) mit einer Kerbe (25B) umfasst, die die Auflage auf dem seitlichen Träger (15) des Querträgers des Armaturenbretts bildet.

3. Vorderstruktur (3) nach Anspruch 2, **dadurch gekennzeichnet, dass** der hintere vertikale Abschnitt (25) des oder jedes der Halter (23) für den Strahl (21) eine Befestigungsöffnung (25C) für den Strahl (21) aufweist.

4. Vorderstruktur (3) nach einem der Ansprüche 2 und 3, **dadurch gekennzeichnet, dass** der hintere vertikale Abschnitt (25) des oder jedes der Träger (23) des Bündels (21) um einen Winkel (a) geneigt ist, der zwischen 30° und 60° in Bezug auf eine Längsrichtung liegt.

5. Frontstruktur (3) nach einem der Ansprüche 2 bis 4, **dadurch gekennzeichnet, dass** der hintere vertikale Abschnitt (25) des oder jedes der Halter (23) des Bündels (21) von der benachbarten Frontflügeleinlage (7) beabstandet ist, um zwischen dem Abschnitt (25) und der Einlage (7) einen Durchgang (19) für das Bündel (21) zu bilden.

6. Vorderstruktur (3) nach einem der Ansprüche 2 bis 5, **dadurch gekennzeichnet, dass** der seitliche Träger (15) des Querträgers des Armaturenbretts, auf dem der oder einer der Träger (23) des Bündels (21) aufliegt, eine Kerbe (15B.1) umfasst, die mit der Kerbe (25B) des hinteren vertikalen Abschnitts (25) des Trägers (23) des Bündels (21) in Eingriff steht.

7. Vorderbau (3) nach Anspruch 6, **dadurch gekennzeichnet, dass** die Aussparung (15B.1) des oder der seitlichen Träger (15) des Querträgers des Armaturenbretts horizontal ist.

8. Vorderstruktur (3) nach einem der Ansprüche 1 bis 7, **dadurch gekennzeichnet, dass** der oder jeder der Träger (23) des Bündels (21) einen vorderen Abschnitt (27) umfasst, der auf dem unteren Querträger (17) der Öffnung (11) aufliegt.

9. Vorderstruktur (3) nach Anspruch 8, **dadurch gekennzeichnet, dass** der vordere Abschnitt (27) des oder jedes der Halter (23) für den Strahl (21) horizontal oder um weniger als 30° in Bezug auf eine horizontale Ebene geneigt ist.

10. Vorderbau (3) nach einem der Ansprüche 6 und 7 und nach einem der Ansprüche 8 und 9, **dadurch gekennzeichnet, dass** für den oder jeden der Träger (23) des Bündels (21) die entsprechende Aussparung (15B.1) des entsprechenden Seitenträgers (15) des Armaturenbrettträgers so ausgebildet ist, dass sie einen Drehanschlag des Trägers (23) des Bündels (21) bildet.

## Claims

1. Front structure (3) of motor vehicle body (1), comprising:
- on each side (5) of the vehicle (1), a dashboard cross-member side support (15) attached to a front wing liner (7), and
- a lower cross-member (17) of a bay (11) positioned in front of the side supports (15) and laterally attached to the front wing liners (7),
**characterized in that** the structure (3) further comprises, at at least one of the sides (5) of the vehicle (1), a carrier (23) for the passenger compartment beam (21) bearing on the corresponding side carrier (15) for the dashboard cross-member and on the lower cross-member (17) for the bay (11).

2. Front structure (3) according to claim 1, **characterized in that** the or each of the beam supports (23) (21) comprises a vertical rear portion (25) with a notch (25B) forming the bearing on the lateral dashboard cross-member support (15).

3. Front structure (3) according to claim 2, **characterized in that** the vertical rear portion (25) of the or each of the beam supports (23) (21) comprises a fixing orifice (25C) of the beam (21).

4. Front structure (3) according to one of claims 2 and 3, **characterized in that** the vertical rear portion (25) of the or each of the beam supports (23) (21) is inclined at an angle (15) of between 30° and 60° with respect to a longitudinal direction.

5. Front structure (3) according to one of claims 2 to 4, **characterized in that** the vertical rear portion (25) of the or each of the bundle supports (23) (21) is at a distance from the adjacent front wing lining (7) so as to form, between said portion (25) and said lining (7), a passage (19) for the bundle (21).

6. Front structure (3) according to one of claims 2 to 5, **characterized in that** the lateral dashboard cross-member support (15) on which the or one of the beam supports (23) is supported comprises a notch (15B.1) engaged with the notch (25B) of the vertical rear portion (25) of said beam support (23) (21).

7. Front structure (3) according to claim 6, **characterized in that** the notch (15B.1) of the side support or supports (15) for the dashboard cross-member is horizontal.

8. Front structure (3) according to one of claims 1 to 7, **characterized in that** the or each of the bundle supports (23) (21) comprises a front portion (27) bearing on the lower cross-member (17) of the bay (11).

9. Front structure (3) according to claim 8, **characterized in that** the front portion (27) of the or each of the beam supports (23) (21) is horizontal or is inclined by less than 30° with respect to a horizontal plane.

10. Front structure (3) according to one of claims 6 and 7, and according to one of Claims 8 and 9, **characterized in that** for the or each of the beam supports (23) (21), the corresponding notch (15B.1) of the corresponding side dashboard cross-member support (15) is designed to form a rotational stop of said beam support (23) (21).
